# EUROPEAN PATENT SPECIFICATION

(11) **EP 3 595 241 B1**
(45) Date of publication and mention of the grant of the patent: **17.07.2024**
(21) Application number: 19164379.0
(22) Date of filing: 21.03.2019
(51) Int. Cl.: H04L 9/32, G06Q 20/06, G06Q 20/40, H04L 9/08, H04L 67/62, H04L 9/00

(54) **DISTRIBUTED BLOCKCHAIN WITH DELAYED TRANSACTION**
VERTEILTE BLOCKCHAIN MIT VERZÖGERTER TRANSAKTION
CHAÎNE DE BLOCS DISTRIBUÉE À TRANSACTION RETARDÉE

(30) Priority: 13.07.2018 EP 18183407
(43) Date of publication of application: 15.01.2020
(73) Proprietor: Tuncer, Kevin Kei, 52477 Alsdorf (DE)
(72) Inventor: Tuncer, Kevin Kei, 52477 Alsdorf (DE)
(74) Representative: LifeTech IP Spies & Behrndt Patentanwälte PartG mbB

(56) References cited:
- AU-A4- 2018 100 482
- US-A1- 2017 046 693
- US-A1- 2018 139 043

## Description

### FIELD OF THE INVENTION

The invention relates generally to a method for delaying a transaction in a blockchain network, and more specifically, to a computer-implemented method for delaying a transaction to a recipient in a blockchain network. The invention relates further to a corresponding system for delaying a transaction to a recipient in a blockchain network and a computer program product.

### BACKGROUND

Recently, a lot of inventions have been made around blockchain-based crypto-currencies. Many initial coin offerings (ICO) have been made and collected large amounts of capital. Well-known examples are Bitcoin, Euthereum and Ripple. The market has seen hundreds of different crypto-currencies with different - in some cases identical - technologies.

A crypto-currency can be used - among others - as a decentralized payment system. Individual transactions may be stored in a blockchain - or better a plurality of identical blockchains on different nodes of a blockchain network - and managed, confirmed and secured by the blockchain network. A confirmation of a transaction is typically enabled through a cryptographic method and a consensus in the blockchain network. Several different methods for a decentralized consensus approach have been implemented. The blocks of the blockchain comprise stored records of a cryptographic method. In a fully functioning crypto-currency technology, these records and/or blocks cannot be changed; the blockchain can only be extended. New transactions are collected and can be stored in a new block that is extending the blockchain. By using a defined sequencing of the blocks, which may have assigned fixed numbers, denoted as block number, the sequence of blocks becomes reliably unchangeable. The computers in the blockchain networks or nodes, which are involved in the block generation and confirmation, are named miners.

Users of the crypto-currency may have a so-called wallet. Using this wallet, a user may see and control how many units of the crypto-currency he owns, and which he may use for transactions.

Wallets are linked to recipient logical addresses. They may be the source and the destination of units of the crypto-currency in case of a transaction. The amount of crypto-currency units a user may access and use for a transaction is determined by adding all transactions that have been received by the specific wallet; all outgoing transactions are subtracted from this amount. The result is the amount of currency units a user of a wallet may have available. If a transaction would result in a negative wallet balance, the user may not perform a planned transaction.

However, the current crypto-currency systems also have disadvantages. If a person living in one country, having a first jurisdiction, may order a service (or product) from a service provider in another country, having a second jurisdiction, it may create certain problems when paying with the crypto-currency being managed in a decentralized way.

In a classical payment system and in case of a dispute - e.g., upfront payment and the service is not being delivered - a neutral third party or a middleman would need to be involved in order to regulate the dispute. Typically, both parties trust such a third-party. That may be a court, a judiciary, a governmental trustee, an escrow service or any other public trustee. He/she may decide in case of disputes. This is a typical way to ensure customer rights.

However, using a crypto-currency, such a third-party or trustee is not required in all cases. Transactions may be performed without any third party or middleman. This may increase the risk for the buyer if he pays upfront and the service is not delivered. Because the senders and receivers in a decentralized blockchain-based crypto-currency system are often anonymous, the party not conforming to the agreement - i.e., not delivering the service - can often not be made liable for failing to be in line with the original agreement - i.e., an exchange of a certain amount of crypto-currency units against service delivery.

Some crypto-currencies also offer smart contracts. This can be seen as a sort of digital contract being based on if-then-conditions which may be executed automatically in case a predefined condition is fulfilled. However, also these smart contracts cannot automatically sort the trust problem in a decentralized crypto-currency system based on a decentralized ledger.

Additionally, systems with multi-signature wallets are known. However, because of the anonymity, the party being responsible for a payment may, out of comfort, omit an authorization of a payment without fearing any consequences. Hence, also such a solution may have similar disadvantages as needing trustees while being difficult and complex to handle.

Thus, the anonymity, and with that the missing ability to make a payment receiver responsible for delivering his service, is a known disadvantage of current crypto-currency systems. Thus, there is a need to close this gap in crypto-currency payment systems. Document AU2018100482 A4 discloses a method, wherein a crypto-currency transfer transaction may be deferred for a predefined time period in order to check the liability of the sender/receiver (e.g. to check as to whether or not the sender/received fulfill the requirements in the smart contract). A third-party server can delay, hold or reverse a transaction (by holding the transaction until it expires) between the sender and the recipient in case of dispute. Document US 2018/139043 A1 discloses a method, wherein in a blockchain network, when any of the plurality of use constraints are identified during the access attempt of the sub-asset, access to the corresponding sub-asset can be prohibited for any period of time (which may be a predetermined period of time). These sub-assets may crypto-currency transfer transactions.

### SUMMARY

This need may be addressed by the here proposed computer-implemented method for delaying a transaction to a recipient in a blockchain network, a related system for delaying a transaction to a recipient in a blockchain network and a computer program product, according to the independent claims.

According to one aspect of the present invention, a computer-implemented method for delaying a transaction to a recipient in a blockchain network may be provided. The blockchain network may comprise a plurality of nodes for managing a distributed ledger for a crypto-currency.

The method may also comprise receiving a token and a time period value, wherein the token may represent an asset value transferable in the crypto-currency from a sender identifiable by a sender identifier to a recipient identifiable by a recipient identifier, and confirming an asset value transfer relating to the token in the blockchain network by appending information about the asset value transfer as transaction information to a block in the blockchain network.

The method may also comprise denying the recipient's access to the transferred asset value by the recipient temporarily until the time period expires, and upon receiving a stop message from the sender within the time period defined by the time period value, the method may comprise denying the recipient's access to the transferred asset value permanently, and granting access to the asset value to a third party identifiable by a third party identifier.

According to another aspect of the present invention, a related system for delaying a transaction to a recipient in a blockchain network may be provided. The system may comprise a plurality of nodes building the blockchain network for managing a distributed ledger for a crypto-currency. Each of the plurality of nodes may comprise a central processing unit and a memory coupled to the central processing unit adapted for executing program instructions.

The system may further comprise a receiving unit adapted for receiving a token and a time period value, wherein the token may represent an asset value in the crypto-currency transferable from a sender identifiable by a sender identifier to the recipient identifiable by a recipient identifier. The system may also comprise a confirmation unit adapted for confirming an asset value transfer relating to the token in the blockchain network by appending information about the asset value transfer as transaction information to a block in the blockchain network.

Additionally, the system may comprise a denying unit adapted for denying the recipient's access to the transferred asset value by the recipient temporarily until the time period expires. The denying unit may also be adapted for permanently denying the recipient's access to the transferred asset value if a stop message is received within the time period defined by the time period value, and granting access to the asset value to a third party identifiable by a third party identifier.

Furthermore, embodiments may take the form of a related computer program product, accessible from a computer-usable or computer-readable medium providing program code for use, by, or in connection, with a computer or any instruction execution system. For the purpose of this description, a computer-usable or computer-readable medium may be any apparatus that may contain means for storing, communicating, propagating or transporting the program for use, by, or in connection, with the instruction execution system, apparatus, or device.

The proposed computer-implemented method for delaying a transaction to a recipient in a blockchain network may offer multiple advantages and technical effects:

The problem of an anonymous payment method and service delivery in which a party ordering a service - or alternatively a product - is generally unknown (in a legal sense) to the party delivering the service, and vice versa, is addressed. This anonymity applies also to the payment in form of crypto-currency units, e.g., transferred as a token.

In today's systems, the ordering party may or may not, pay for the received service (product) before a service delivery. Because of potentially different jurisdictions and the generally assumed anonymity of the trade partners, none of the two parties have any levers to punish the other party in case the other party does not deliver - in particular, either the crypto-currency or the service. Thus, if the ordering party receives the service but does not pay afterwards, the supplier of the service is delivering without getting his earned compensation, and the other way around.

The proposed concept allows a control of a payment - in particular in form of a token - in a controlled time period, relatively close to the order of the sender. The service delivering party can now make his service available, but cannot - during the predefined time period - access the transferred amount of crypto-currency units. Only at the end of the time period, or later, the recipient (of the crypto-currency units) may access the transferred amount. As long as the time period has not expired, the sender may - after he has sent a token representing the crypto-currency value transfer - send a stop message. In that case, the recipient will not get access to the crypto-currency assets having currency value temporarily. Instead, the transferred crypto-currency units may be lost for him forever. The value may be made available to a third party automatically. Thus, neither the sender nor the recipient has access to the crypto-currency units. The third-party may be known upfront to the transaction - i.e., according to a predefined scheme. It may, e.g., be a member of the crypto-currency network or a nonprofit organization or nonprofit institution, like content providers, open source communities or another third-party group, neutral to the sender and the recipient.

An additional transaction may automatically be generated to transfer the crypto-currency units to the neutral third party. Hence, the asset value - i.e., the transferred token(s) - may be made available automatically and implicitly by the management system of the blockchain network to a third party, e.g., one or more of the miners. Neither the sender nor the recipient may have an advantage if the sender sends the stop message.

The value may be transferred to parties operating the distributed ledger or the blockchain network or to other parties like content providers, open source communities or other groups neutral to the sender and the recipient.

This may allow the sender full control over the asset value unit until the time period expires, or, e.g., until he may have received his ordered service completely and without any limitations.

In a nutshell, a completely dynamic assignment of the assets may be enabled. In order not to undermine the general concept of the proposed idea, it would be advisable to only transfer back a small amount - e.g., in the range of about 5% - to the sender, so that he will not have a benefit of sending the stop message. Also, the recipient should not benefit from such a stop message; thus, a similar amount may be transferred to the recipient.

If the recipient wants to cheat by not delivering his service (or product), neither the sender nor the recipient may have access to the value asset in form of the token(s) if a stop message was sent by the sender (or only to a small portion). However, the trust to the recipient is lost which may be made known to other potential parties intending to transfer an asset value to the recipient.

Additionally, the proposed concept may also be used for voting processes.

In the following, additional embodiments of the inventive concept - in particular of the method also applicable to the related system - will be described.

According to an advantageous embodiment of the method, the third party identifier may be related to a group of third party identifiers and a respective new transaction may be generated to each party of the group - alternatively, it may be one combined transaction. Thereby, access to a predefined portion of the asset value is granted to each member of the group. Members of the group may include the sender and/or the recipient but mainly other third parties, like operator organizations of the blockchain network or nonprofit organizations, like open-source providers or content providers or musicians, etc.

This may happen if the sender has sent a token (or more) to the recipient, but the recipient does not fulfil his part of the agreed transaction "token against service or product". The sender will not necessarily benefit from his stop message because he will not get his token(s) back. Otherwise misuse would be possible: the receiver may have delivered his service or product and the sender could send the stop message. Thus, he would have both, the token(s) and the service or product. Therefore, the concept proposes to transfer the token(s) to a neutral instance, e.g., the operator network of the blockchain. This way, both parties will be discouraged to violate good business practices.

According to another advantageous embodiment, the method may comprise, upon determining a cancellation message from the recipient, granting access to the asset value back to the sender. In this case, the recipient of the token may admit that he cannot deliver the service of product promised and the originator of the order, i.e., the sender may receive back his token. The trust may remain between the constituents.

According to another useful embodiment, the method may also comprise extending the time period by setting an increased time period value by the recipient. This may signal that the recipient - i.e., the one having accepted an order - may not be able to fulfil his duty to deliver the service or product offered in an agreed timeframe. He may pay a fee to the sender (i.e., sender of an order) or to the system operators of the blockchain network; however, also during the extended time period the recipient will not have access to the transferred asset value. None of the two involved parties- the sender and the recipient- any real disadvantage.

A further embodiment of the method may comprise, upon determining a reset of the time period, e.g., by setting a decreased time period value, especially by the sender - granting immediate access to the asset value by the recipient. This may reflect the case that the sender (e.g., of the order) may have received his ordered service or product from the recipient in the originally set time period value. The sender may then have the option to shortcut the waiting time for the recipient by setting a decreased time period value or resetting the time period value completely. The consequence would be that the recipient may have access to the transferred asset value immediately. For the resetting or decreasing the time period value, a new transaction may be generated in the underlying blockchain.

It may also be mentioned that in one specific embodiment, the complete crypto-currency value may be transferred back in a transaction from the recipient to the sender if a stop message has been received.

According to one optional embodiment, the method may also comprise receiving a service order by the recipient, wherein the service order relates to the token. Thus, an order for a service from the recipient may be generated in relationship to the token transfer from the sender to the recipient. The order and the token may be transmitted simultaneously - e.g., coupled to each other - from the sender to the recipient. Alternatively, the token may be transferred after a reception and confirmed delivery of the service, e.g., in electronic form, like, an access key to digital content, a computer game access, software access key, or similar

According to one allowable embodiment of the method, the time period value may be set by the sender. This may not represent the most typical implementation of the proposed concept. However, it may enable implementation flexibility, in particular, in the case of a voting system.

According to another allowable embodiment of the method, the time period value may be set by the recipient. This may be a reality-near implementation alternative. Typically, the recipient of the token may know when the service he intends to deliver should have reached the sender of the token, i.e., the ordering party. Thus, the recipient's time period definition may be set to a time value, such that the sender receives his ordered goods or service for sure; otherwise, the sender may send the stop message and the recipient may not receive the token representing the asset value transfer.

In one further embodiment, the recipient may set a plurality of time period values as proposals and may link it to different prices to be paid for the service in crypto-currency units. In one example, the price may be decreased - or alternatively, increased - the lower the time period value is selected. The sender may choose from the proposed time periods.

Thus, according to one permissive embodiment, the method may also comprise transmitting a plurality of potential time period values from the recipient to the sender and selecting one of the plurality of potential time period values by the sender as the time period value. A fee may be related to the option to select from a plurality of time periods for stop messages as well.

According to another permissive embodiment, the method may also comprise transmitting a time period range value from the recipient to the sender, and selecting a time period value from within the time period range by the sender as the time period value. This way, a recipient or service provider may provide a time period value from which the ordering person - i.e., the sender - may select one time period value. As an option, the sending the stop message may be related to a certain stop message fee. If the sender may have the option to select the stop message time period value, the fee may vary depending on the selected time period value. The fee may generally be transferred to a miner or a group of miners or another third-party like a nonprofit organization. Also other destinations for the fees are possible, e.g., the recipient.

According to one advantageous embodiment of the method, an end of the time period may be an absolute time value or a relative time value. The relative time value may start at, e.g., a sent time of the related token. As sent times, different alternatives may be possible: e.g., the time the transaction was generated from the sender, the time it was recognized by the blockchain network or the time it was recorded in the blockchain.

Thus, also other relative orientation marks for a beginning of the time period may be chosen. These alternatives add implementation flexibility to the proposed method. The absolute time would ideally relate to a jointly used calendar/time system (e.g., 11:01:56pm CET, July 5^{th}, 2021).

According to one additional advantageous embodiment of the method, the relative time value may be measured in numbers of blocks in the blockchain network - in particular, added blocks and/or records in the distributed ledger in the blockchain network. This may assume an average time span for a creation of new blocks and/or records in the distributed ledger. Given known computing capacities or other known time periods required in the blockchain network, a typical time required to sort out the cryptographic problem as average time span may be available in the blockchain network. Future advances in computing power may also be anticipated. Alternatively, a proof of stake concept may be considered to address this particular aspect.

However, it may also be possible to determine an absolute block number in the future until the stop message may be accepted resulting in a "no-access" by the recipient. Given an actually known block number and the average creation time of a new block, the future block number until a stop message may be accepted may be calculatable by determining the total number of new blocks generated from a starting point in time and the duration of a time period by dividing the duration through the average time for a new block generation. One would get the number of new blocks which may be added to the actual block number. This way, a simple block number comparison may be sufficient in order to determine a stop message as "in-time" or too late.

If, e.g., 30 seconds may be required for generating a new block in the blockchain and the actual block number would be 12030, then a time period value of 4 hours would be calculatable by
4*60 [min] / 0,5 [min] = 480 blocks.

Thus, the stop message would not be accepted after block number 12030 + 480 = 15010. Such an approach may also be a security measure against fraud because plausibility checks may be performed against potentially fraud related block numbers. It may also address the general problem that good time synchronization among the nodes of the blockchain network may be difficult. Thus, sometimes it may be difficult to decide whether a stop message arrived in time or not. The counting of the blocks may circumvent this difficulty.

According to one optional embodiment, one of the members of the group may be the sender of the token and/or one of the members of the group the recipient of the token. As mentioned above, it may be useful if the sender and/or the receiver may only get a portion of the asset value in case a stop message has been sent.

According to one additionally useful embodiment of the method, the stop message may also be recorded in the blockchain network. It may, in particular, become a record in the underlying blockchain. The stop message in the blockchain together with the underlying transaction from the sender to the recipient may render it comprehensible that the recipient cannot access the originally transferred asset value from the sender to the recipient. A generation of a new transaction for transferring the asset value away from the recipient - because he is not allowed to access it - may be executed or not.

All access rights to assets continue to be managed and recorded within the blockchain. A wallet showing an amount of assets a user may have access to may also use the stop messages and not reflect the underlying transaction as an asset value belonging to that particular user. Storing the time period together with the initial transaction may make it even easier to control such an asset value access.

It may also be the case that the stop message may only then be made part of the blockchain if the stop message may have been received in time, i.e., within the time period value.

In a similar way to additional method embodiments, there may also be a plurality of additional system embodiments which will briefly be mentioned in the following:

According to one additional embodiment of the system, the third party identifier may be a group of third party identifiers and the access may be granted according to predefined rules to members of the group.

According to a further embodiment, the system may also comprise, upon determining a cancellation message from the recipient, granting access to the asset value back to the sender.

One possible embodiment of the system may also comprise extending the time period by setting an increased time period value by the recipient.

And again another possible embodiment of the system may also comprise, - upon determining a reset of the time period by setting a decreased time period value, granting immediate access to the asset value by the recipient.

According to one additional embodiment, the system may also comprise a reception unit adapted for receiving a service order relating to the recipient identifier, wherein the service order may relate to the token.

According to additional embodiments of the system, the time period value may be settable by a sender. Alternatively, the time period value may be settable by the recipient.

According to one additional embodiment, the system may also comprise a transmitter adapted for transmitting a plurality of potential time period values from the recipient to the sender and a selecting unit adapted for selecting one of the plurality of potential time period values as the time period value for the sender.

According to one additional embodiment, the system may also comprise a transmitter adapted for transmitting a time period range value from the recipient to the sender and a selecting unit adapted for selecting a time period value from within the time period range as the time period value for the sender.

According to one additional embodiment of the system, an end of the time period may be an absolute time value or a relative time value starting at a sent time of the related token. The relative time value may be measured in numbers of blocks of in the blockchain network.

According to one additional embodiment of the system, one of the members of the group may be the sender of the token and/or the recipient.

According to one additional embodiment of the system, the stop message may be also recordable in the blockchain network.

Furthermore, embodiments may take the form of a related computer program product, accessible from a computer-usable or computer-readable medium providing program code for use, by, or in connection, with a computer or any instruction execution system. For the purpose of this description, a computer-usable or computer-readable medium may be any apparatus that may contain means for storing, communicating, propagating or transporting the program for use, by, or in connection, with the instruction execution system, apparatus, or device.

### BRIEF DESCRIPTION OF THE SEVERAL VIEWS OF THE DRAWINGS

It should be noted that embodiments of the invention are described with reference to different subject-matters. In particular, some embodiments are described with reference to method type claims; whereas other embodiments are described with reference to apparatus type claims. However, a person skilled in the art will gather from the above and the following description that, unless otherwise notified, in addition to any combination of features belonging to one type of subject-matter, also any combination between features relating to different subject-matters, in particular, between features of the method type claims, and features of the apparatus type claims, is considered as to be disclosed within this document.

The aspects defined above, and further aspects of the present invention, are apparent from the examples of embodiments to be described hereinafter and are explained with reference to the examples of embodiments, but to which the invention is not limited.

Preferred embodiments of the invention will be described, by way of example only, and with reference to the following drawings:
Fig. 1 shows a block diagram of an embodiment of the inventive computer-implemented method for delaying a transaction to a recipient in a blockchain network.
Fig. 2 shows a block diagram of an embodiment of a last portion of a blockchain.
Fig. 3 shows a block diagram of the embodiment of the last portion of a blockchain according to Fig. 2 with a stop message.
Fig. 4 shows an exemplary order/payment/delivery process with a stop message.
Fig. 5 shows a block diagram of an overview of the different send, transfer and stop options of the method.
Fig. 6 shows a block diagram of an embodiment in which the proposed concept is used as a voting system.
Fig. 7 shows an embodiment of the system for delaying a transaction to a recipient in a blockchain network.
Fig. 8 shows an embodiment of a computing system comprising the system for delaying a transaction to a recipient in a blockchain network at least in parts.

### DETAILED DESCRIPTION

In the context of this description, the following conventions, terms and/or expressions may be used:
The term 'transaction' may denote a safe and controlled exchange and recording of an electronic message. The electronic message may comprise an order or a financial transaction, e.g., a value or asset value transfer in a crypto-currency. According to computer science theories, each transaction must succeed or fail as a complete unit; it can never be only partially completed. Typically, a transaction may be related to a record in the ledger system, e.g., a distributed ledger.

The term 'blockchain' may denote a continuously growing list of records, combined in blocks, which are linked and secured using cryptography. Each block may, e.g., contain a cryptographic hash of the previous block, a timestamp, and transaction data. By design, a blockchain may be resistant to modification of the data. It may represent an open, distributed ledger that can record transactions between two (or more) parties efficiently and in a verifiable and permanent way. For use as a distributed ledger, a blockchain may typically be managed by a peer-to-peer network collectively adhering to a protocol for inter-node communication and validating new blocks. Once recorded, the data in any given block cannot be altered retroactively without alteration of all subsequent blocks, which requires consensus of the network majority.

Blockchains are secure by design and exemplify a distributed computing system with high Byzantine fault tolerance. Decentralized consensus can therefore been achieved with a blockchain. This may render blockchains suitable for the recording of events, payments, medical records, and other record management activities, such as identity management, transaction processing, documenting provenance, food traceability, voting, as well as an exchange of measurement data and/or actuator data in an industrial or Internet of Things network.

The term 'consensus' may generally denote a group-making decision process in which group members develop, and agree to support a decision in the best interest of the whole. In the context of blockchain it may denote, in particular, the way a transaction or a new entry in a blockchain is conformed and agreed on in a distributed manner. A consensus algorithm among the constituents of the blockchain network ensures the consistency of the distributed managed blockchains and, in particular, the addition of a new block to a blockchain. Different consensus algorithms are known, e.g., a proof-of-work algorithm or a proof-of-stake algorithm.

The term 'recipient' may denote here the receiver of an asset transaction originating from a sender. In particular, the recipient may receive the token representing an amount of crypto-currency units with which the sender may pay for a service (or product) to be delivered by the recipient. Alternatively, the token may also represent a voting voice in a voting system. It may be noted that the terms receiver and recipient may be used synonymously within this document.

The term 'blockchain network' may denote the sum of the above-mentioned nodes storing and managing copies of the blockchain management system in form of a distributed ledger. Typically, the nodes of the blockchain network are connected by means of the Internet.

The term 'node' may denote a computing system enabled to handle blockchain transactions. The nodes may be of various type and/or architecture and may run different operating systems. Their performance abilities to handle blockchain transaction, network bandwidth, storage and/or memory capacities and processing power may vary from node to node. Each node may store an individual copy of the blockchain.

The term 'verifying the transaction' may denote a conclusion of the transaction information in a block that is published to the network (after a transaction is broadcasted to the blockchain network). When that happens, it is said that the transaction has been mined at a depth of 1 block. With each subsequent block that is found, the number of the block depth is increased by one. To be secure against wrong bookings, a transaction should not be considered as confirmed until it is a certain number of blocks deep. It may also be noted that in blockchain technology, typically transactions do not expire.

The term 'distributed ledger' - also called a shared ledger, or distributed ledger technology, DLT) - may denote a consensus of replicated, shared, and synchronized digital data geographically spread across multiple sites, countries, or institutions. There is no central administrator or centralized data storage. A peer-to-peer network - e.g., in form of the Internet - may be required, as well as, a consensus algorithm to ensure a replication across the nodes. One form of distributed ledger design is the blockchain system, which may be either public or private.

The term 'crypto-currency' may represent a digital asset designed to work as a medium of exchange that uses strong cryptography to secure financial transactions, control the creation of additional units, and verify the transfer of assets. Crypto-currency may be a kind of digital currency, virtual currency or alternative currency. A crypto-currency may typically use a decentralized control as opposed to centralized electronic money and central banking systems. The decentralized control of each crypto-currency works through a distributed ledger technology, typically a blockchain that may serve as a public financial transaction database.

Examples of crypto-currencies are Bitcoins, Euthereum or Stratis.

The term 'token' may denote an information item with the meaning of units of a crypto-currency, or portions thereof. Alternatively, the token may also be used for votes in a voting system. Hence, the term 'token' may denote a digital key (sequence of bits adhering to predefined rules). The token may comprise sub-tokens. The tokens may store information in encrypted form. In one example, a token may represent an asset value in the context of a specific blockchain network or blockchain management system. Thus, a token may represent one or more coins of the crypto-currency (or portions thereof). However, integrated or encoded into the token may also be other values, e.g., a time period.

The term 'asset value' may denote here (a) coin(s) in a crypto-currency. They may be stored and transferable in form of tokens from one user - e.g., sender - to another user - e.g., recipient - of the blockchain network. Asset values in crypto-currency may be exchanged into a real currency.

The term 'asset value transfer' may denote, in the context of this application, that a transfer of a crypto-currency is performed from one participant - e.g., the sender - presented by his identifier related to a crypto-currency wallet to another participant, represented by his respective identifier related to his respective crypto-currency wallet. After the transfer - also be denoted as transaction - the first participant may not access the asset - i.e., the crypto-currency units - any longer. Instead, the recipient or the above-mentioned other participant may, after the complete transfer, access the crypto-currency units. It may be mentioned that in the context of the here proposed concept, the recipient may only access the crypto-currency after a stop message has not been received by the end of the time period. Alternatively, if the stop message has been sent by the sender, the recipient may only have access to a small portion or not at all

The term 'time period' may denote a term during which a recipient of a transaction may not have access to the content of the transaction, i.e., the token representing a value in a crypto-currency. During the time period, the recipient may be denied the access.

The term 'denying access' may denote technically that it may not be possible to access certain data, e.g., transaction data or the token in the related blockchain network.

The term 'stop message' may denote an electronic message enabled to deny the access to the transferred token, sent from the sender to the recipient, and it will never be possible for the recipient, even after the end of the time period (eventually, only to a small portion).

The term 'absolute time' may denote a form in which the time period value is encoded. The absolute time may be a point in time in a continuously developing calendars/time system, e.g., 1 :25:34 pm, July 4^{th}, 2022.

The term 'relative time' may denote another form in which the time period value may be encoded. An example may be: 5 days or 5h or any other definite time value from a starting time point onwards. A starting point for the five days may be the time of a related event, e.g., transaction. Using the relative time or duration, the absolute end time of a time period may easily be determined.

In the following, a detailed description of the figures will be given. All instructions in the figures are schematic. First, a block diagram of an embodiment of the inventive computer-implemented method for delaying a transaction to a recipient in a blockchain network is given. Afterwards, further embodiments, as well as embodiments of the system for delaying a transaction to a recipient in a blockchain network, will be described.

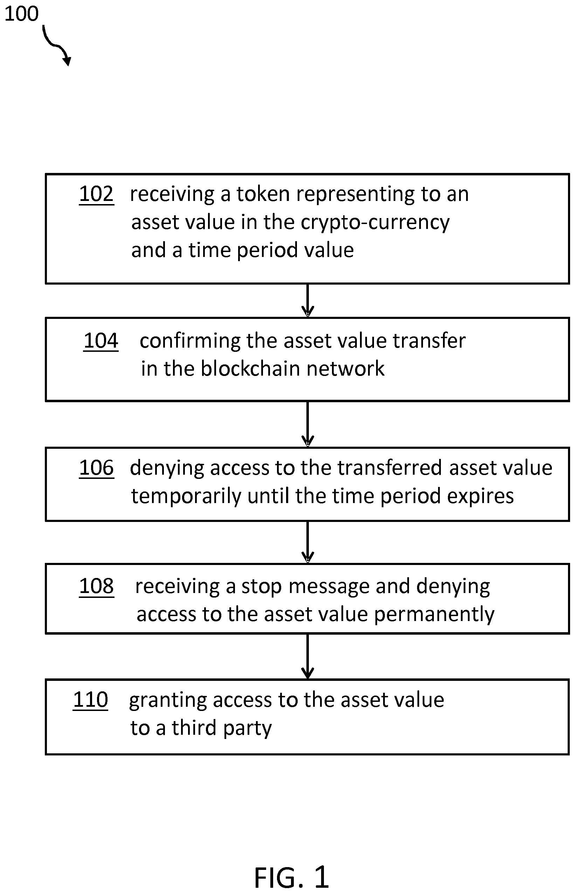

Fig. 1 shows a block diagram of an embodiment of the computer-implemented method 100 for delaying a transaction to a recipient in a blockchain network - in particular a peer-to-peer network of computer nodes - in which the blockchain network comprises a plurality of nodes - in particular computing nodes, computers, or dedicated controllers - for managing a distributed ledger for a crypto-currency, in particular a cryptographically secured artificial currency. The method comprises receiving, 102, a token and a time period value. The token represents an asset value in the crypto-currency. The asset value may be transferable by means of the token and may originate from a sender represented by a sender ID (identifier). The sender ID may be related to a wallet representing the total amount of crypto-currency units available to a sender user. The sender is identifiable by a sender ID, and the asset value transfer - in particular in form of the token representing crypto-currency units - is directed to the recipient identifiable by a recipient ID. Actually, the transfer is performed from the sender wallet to the receiver wallet using the blockchain network. It may be noted that token and time period value may be transmitted in a joint data structure, e.g., a joint token. Both may be transmitted in an encrypted form, either together or alone.

The method 100 also comprises confirming, 104, an asset value transfer relating to the token in the blockchain network by appending information about the asset value transfer as transaction information to a block - e.g., in form of appending the transaction record related to the asset value transfer to the last, open block of the blockchain. The distribution/replication of the transaction record in the blockchain network may be performed by broadcasting the transaction record to other members or nodes of the blockchain network for an inclusion into the distributed ledger by a known proof of stake or proof of work confirmation method which happens when a block is considered to be complete, e.g., when comprising a predetermined number of records or a given time passes by.

The method 100 additionally comprises denying, 106, access to the transferred asset value - in particular in form of the related crypto-currency units - by the recipient temporarily until the time period expires. And upon receiving, 108, a stop message - in particular generated by the sender and sent to the recipient, i.e., to the blockchain network/the distributed ledger - within the time period defined by the time period value, denying access to the transferred asset value by the recipient permanently.

The method may also comprise generating, 110, a new transaction (or more) granting access to the asset value to a third party (or a group of 3^{rd} parties) identifiable by a third party identifier. Thus, if the sender generates the stop message and transfers it, the recipient cannot make use of the transferred crypto-currency units; instead, these transferred crypto-currency units are transferred to another receiver, e.g., neutral to the sender and the receiver. This may be recorded in the blockchain or the blockchain management system may handle that separately. The stop message may also be recorded in the blockchain with a reference to the original transaction. The same applies to the time period.

Consequently, in this example, the sender will not get back his transferred crypto-currency units, but also the recipient will not be able to access the transferred crypto-currency units. The time period for the optional second automatically generated transaction is set to zero time units, i.e., will be executed immediately, i.e., is has an immediate effect after the time period expires.

In case no automatically generated transaction will be generated, the blockchain management system may control a distribution of the asset value not accessible by the recipient using other method, e.g., may make it automatically available to a miner or others.

It may also be noted that access to the crypto-currency units is typically done using a so-called wallet in a way known to a skilled person.

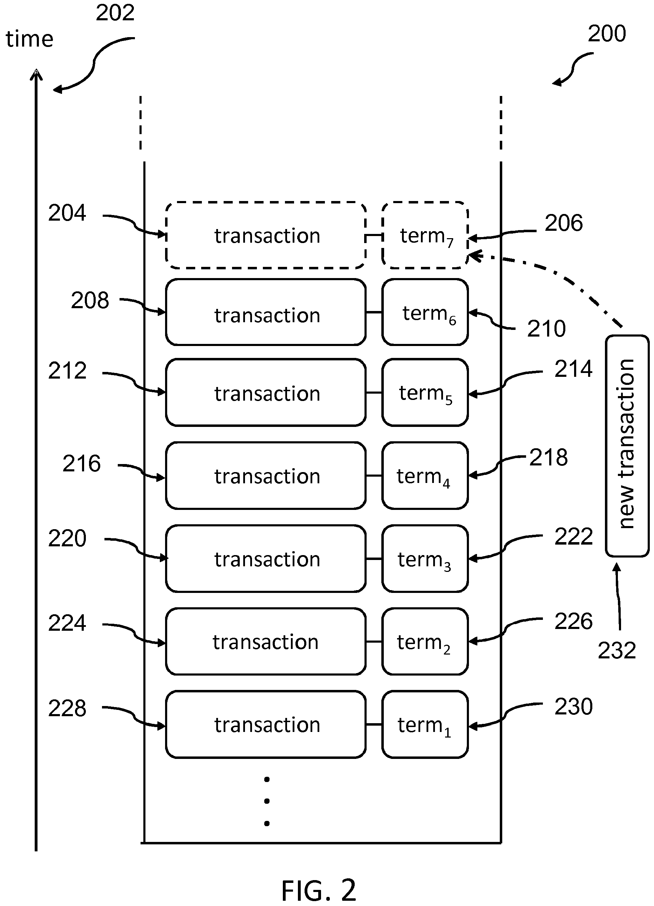

Fig. 2 shows a block diagram of an embodiment of a last portion, i.e., a last block 200 of a blockchain. The individual (older) blocks of the blockchain are not shown. However, a series of transactions - typically being represented by records - is shown. Exemplary, records 204, 208, 212, 216, 220, 224, 228 are shown. Typically, the records representing the transactions are sorted in a time-stamped way. The time is indicated by arrow 202. One may also note that a time period value 206, 210, 214, 218, 222, 226, 230 - in particular a time period value - is linked to a transaction. The terms relating to the time period values typically end at different points in time and therefore may have different durations.

A new transaction 232 is logged as last item in the block 200 of the blockchain. As one can see, also the terms_{1...7}, i.e., time period values 206, ..., 230 are logged in the blockchain. The transactions typically have an ID, e.g., a hash value or a static record number.

The recipient may not access the asset value related to the transaction until the term expires. If the term expires without receiving a stop message, the recipient will be able to access the crypto-currency units using his wallet in a known fashion.

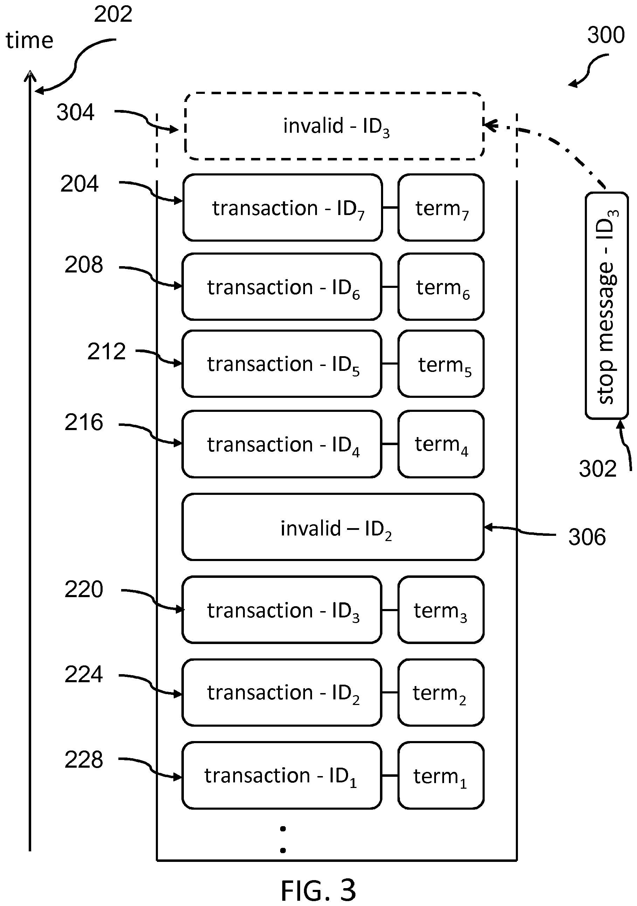

Fig. 3 shows a block diagram 300 of the embodiment of the last portion of a last block 200 of a blockchain according to Fig. 2 with a stop message 302 which will be appended to the last, open block 204 of the blockchain similar to any of the regular transactions indicated as invalid record 304 pointing to the transaction 220 with ID₃. In this figure, the transaction are shown with an individual ID (ID₁, ID₂, ..., ID,). Furthermore, another invalidation record 306 is shown - which has obviously been received between the transactions 220 and 216. This invalidation record 306 points to the transaction 224 with ID₂.

Thus, the recipients of the transactions 224 / ID₂ and 220 / ID₃ cannot access the asset value represented in the corresponding record of the transactions. The stop messages relating to the invalidation records 304, 306 integrated into the blockchain network - or more precisely, by a node of the blockchain network - indicate that the transaction of crypto-currency coins from the sender to the recipient shall not happen. The stop message 302 has to be received by the blockchain network within the term, i.e., before the time indicating the end of the time period. Otherwise, it would be added as a recorded block in the blockchain. It may also be noted that the function of the stop message - making the original relating transaction inaccessible by the recipient (temporarily or permanent) - also applied across blocks of the blockchain. Thus, a stop message may be recorded in a later block if compared to the original relating transaction or block.

Thus, the stop message 302 will also be logged in the blockchain as an invalidation record 304, undergoing the consensus algorithm of the block is complete like any other transaction. The stop message in the blockchain also comprises a reference to the original transaction, e.g., transaction 224 and/or 220. When determining the total asset value a user can access it using his wallet, the information of the invalidation records will also be considered and the asset value from the originating transaction will prevented from being added to the total amount a user may access if an invalidation record exists.

Alternatively, and according to another embodiment, as a reaction to the receiving of the stop message 302, a new transaction (not shown) is generated automatically for immediate validity by the distributed ledger for the benefit of the third-party (or 3^{rd} party group). Consequently, the third-party may access the crypto-currency units using its wallet in a usual way.

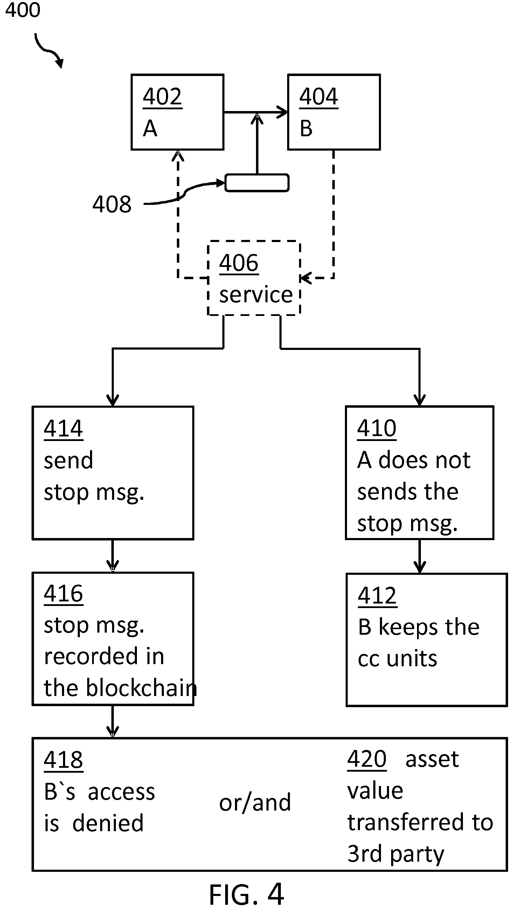

A typical example of the proposed concept technique will be discussed next. **Fig. 4** shows an order/payment/delivery process 400. It may be implemented using the proposed concept. A participant A 402 may order a service 406 from participant B 404. A certain amount of crypto-currency units may be transferred from participant A 402 to participant B 404, as transaction 408, to be recorded in the blockchain network, i.e., the distributed ledger.

Participant B 404 decides - after he has received the crypto-currency value transfer - either to deliver the service 406 or not. However, because the time period linked to the transaction 408 has not been expired yet, participant B 404 temporarily cannot access the transferred crypto-currency units using his wallet.

However, if the time period ends and participant A 402 does not send a stop message (410), participant B gets access granted to the crypto-currency units (412).

Alternatively, participant A may choose to send a stop message (414) which will also be recorded, 416, in the blockchain. Participant A shall do this within the time period, especially in the case he did not receive the ordered service 406. In that case, participant B's access to the asset value, i.e., the crypto-currency token, continues to be denied permanently (418).

Instead, somebody else (e.g., a miner or a content provider) will get access to the asset value. E.g., an optional new transaction can be generated automatically - and/or according to predefined rules - so that the crypto-currency units will be transferred to a third party (420). As discussed above, the third-party may also be a group of participants in the blockchain network. Alternatively, the control over the blocked access may be given to the blockchain control system for other purposes.

If the stop message would be sent after an expiration of the time period, it may have no effect at all.

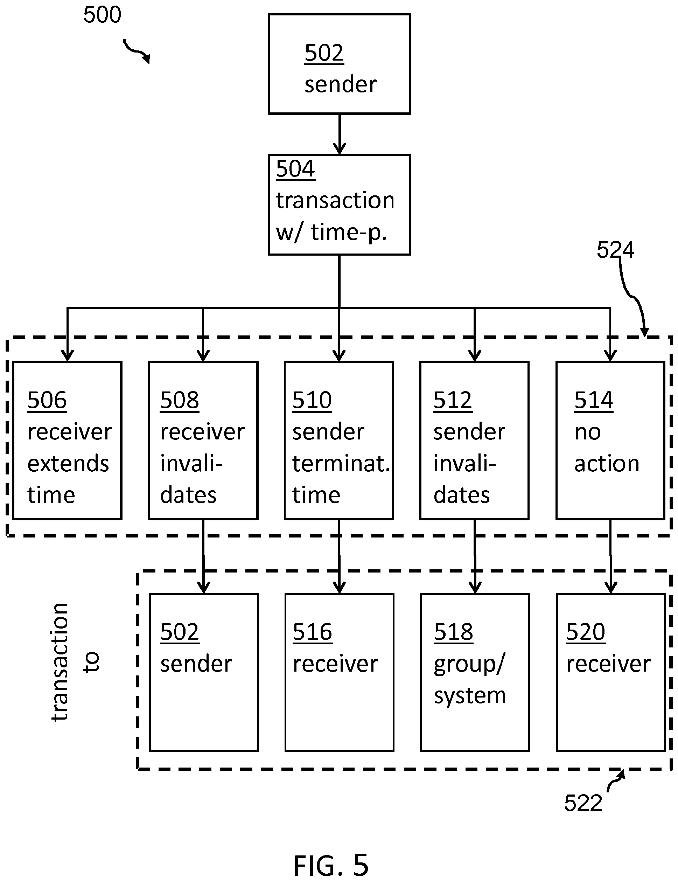

Fig. 5 shows a block diagram 500 of an overview of the different send, transfer and stop options of the method. The sender 502 initiates a transaction 504 with a time period. In case no action happens, 514, i.e., no stop message was sent, the receiver 520 will have access to that the asset value in form of the sent token(s). It may be noted that the dashed box 522 represents potential recipients of the asset value. In contrast to the dashed box 524 represents the potential influence factors during the time period.

If the sender invalidates, 512, i.e., sends a stop message, the asset value will be transferred to a third party, i.e., a group of alternative recipients or the block chain system itself in form of the miners, 518.

In case the sender terminates the time period or resets, 510, the time period to a smaller value, the receiver would have access earlier - i.e., after the expiration of the short a time period or immediately if the time period is reset to zero. This may be a motivation for the recipient to deliver his service as fast as possible.

It may also be possible that the recipient invalidates the transaction, 508. In this case, the original sender is granted back the access to the asset value, 502.

A further option may be that the recipient extends the time, 506. He may do this if he is not able to deliver his service to the sender in the agreed time expressed as time period value. In that case, the status of the system goes more or less back to the original status in which the sender has initiated the transaction with a time period 504. All options for the influence factors 524 are available again.

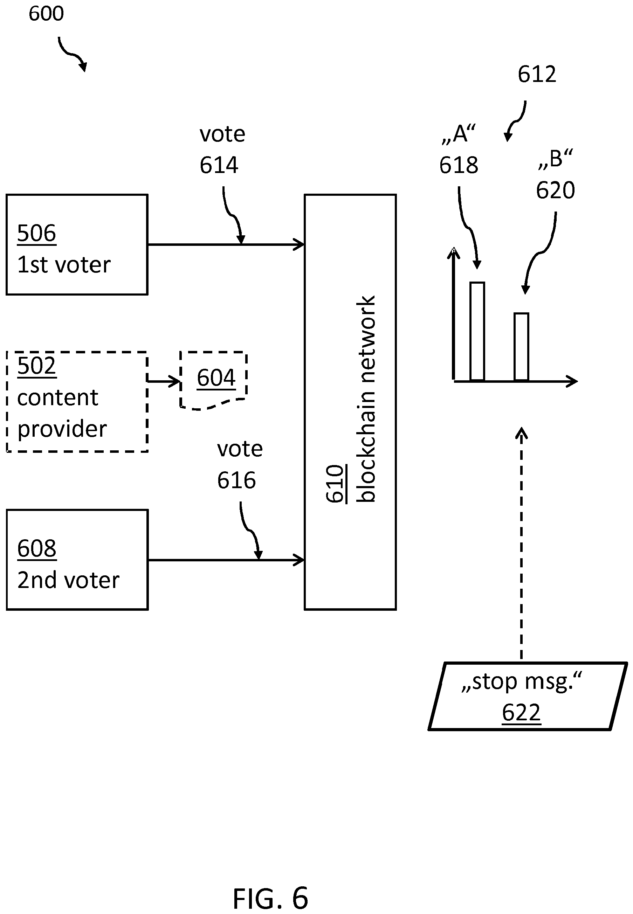

Fig. 6 shows a block diagram of an embodiment 600 in which the proposed concept is used as a voting system. As an example, a content provider 602 may have produced a content item 604 (alternatively, the voting system may be used for any decision-making process involving a larger amount of people, see below). A plurality of voters - of which a 1^{st} voter 606 and a 2^{nd} voter 608 are shown explicitly - can express their approval in form of voting for "A" or for "B". The messages or votes 614, 616 may be transferred from the voters 606, 608 as senders via the blockchain network 610 to a neutral voting manager or the content provider as receiver via the blockchain network 610. A small amount of a crypto-currency may be attached to each vote. The amount of votes for "A" 618 and "B" 620 should - for simplicity reasons - be the same. However, the system may also work with different amounts for the different opinions. Also, more than two opinions are controllable using the principles of the voting system.

Over time and at the end of the voting process, an exemplary result is shown as diagram 612. As it can be seen, the "A" votes 618 are more than the "B" votes 620. Hence, the "A" votes 618 represent a higher value of the crypto-currency than the "B" votes 620.

Now, the further development depends on the behavior of the content provider. If "A" was related to produce a certain result (e.g., a certain content item) and the content provider decided for producing "A" it can be assumed that a large number of stop messages 622 would be received from the "B" voters.

If, however, the content provider decides for "B" - and thereby against the voting result which marks "A" as a winner - most stop messages 622 may be received from "A" voters. Thus, for deciding against voter's result, the financial benefit decreases ("B" money is less than "A" money").

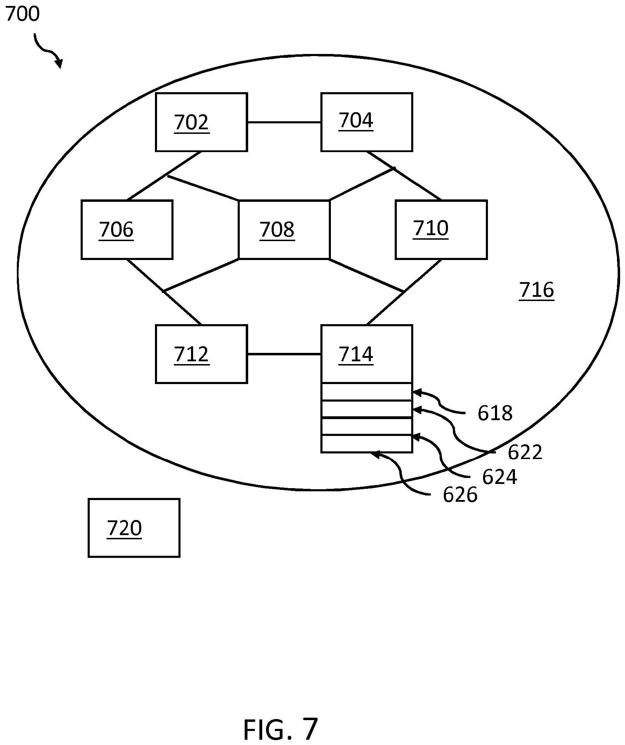

Fig. 7 shows an embodiment of the system 700 for delaying a transaction to a recipient in a blockchain network 716. The system 700 comprises a plurality of nodes 702, 704, ..., 714 building the blockchain network 716 for managing a distributed ledger for a crypto-currency.

Each of the plurality of nodes comprises a central processing unit (not shown) and a memory (not shown) coupled to the central processing unit adapted for executing program instructions.

A receiving unit 718 - exemplary shown at node 714 - is adapted for receiving a token and a time period value. The token represents an asset value in the crypto-currency - e.g., a coin - transferable from a sender 720 identifiable by a sender ID to the recipient identifiable by a recipient ID. Also here, the token and the time period value may be combined in a joint data structure, e.g., a joint token. Both may be logged in the blockchain together.

The system 700 also comprises a confirmation unit 722 adapted for confirming an asset value transfer relating to the token in the blockchain network 716 by appending information about the asset value transfer as transaction information to a block in the blockchain network 716 and a denying unit 724 adapted for denying the recipient's access to the transferred asset value by the recipient temporarily until the time period expires. The denying unit 724 is also adapted for denying the recipient's access to the transferred asset value by the recipient permanently if a stop message is received within the time period defined by the time period value.

Last but not least, the system 700 may optionally comprise a generator 726 adapted for generating a new transaction granting access to the asset value to a third party identifiable by a third party identifier, upon receiving a stop message within the time period defined by the time period value.

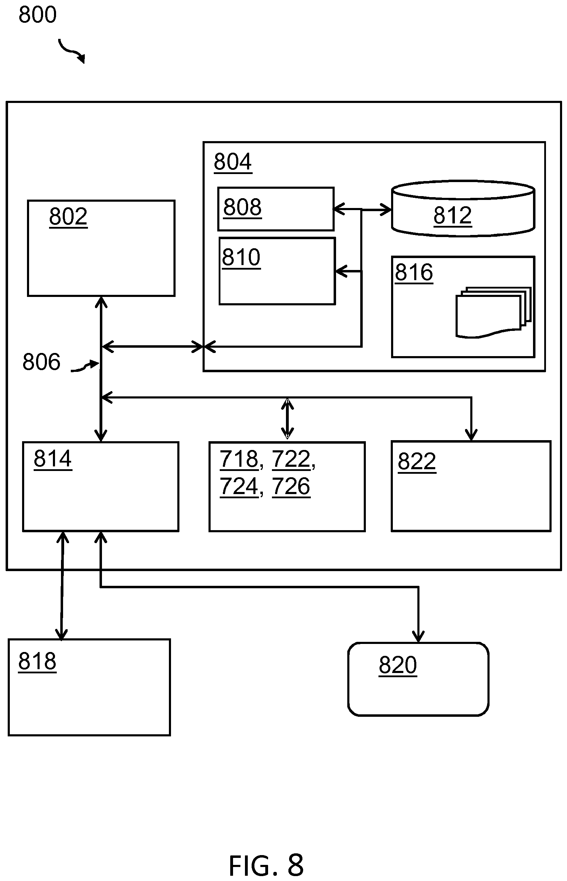

The embodiments of the proposed concept may be implemented together with virtually any type of computer - here denoted as nodes - regardless of the platform being suitable for storing and/or executing program code. **Fig. 8** shows, as an example, a computing system 800 suitable for executing program code related to the proposed method.

The computing system 800 is only one example of a suitable computer system and is not intended to suggest any limitation as to the scope of use or functionality of embodiments of the invention described herein. Regardless, the computer system 800 is capable of being implemented and/or performing any of the functionality set forth hereinabove. In the computer system 800, there are components, which are operational with numerous other general purpose or special purpose computing system environments or configurations. Examples of well-known computing systems, environments, and/or configurations that may be suitable for use with computer system 800 include, but are not limited to, tablet computers, hand-held or laptop devices, multiprocessor systems, microprocessor-based systems, programmable consumer electronics, smartphones, and digital cameras with spare computing capacity that include any of the above systems or devices, and the like. Computer system 800 may be described in the general context of computer system-executable instructions, such as program modules, being executed by a computer system 800. Generally, program modules may include routines, programs, objects, components, logic, data structures, and so on that perform particular tasks or implement particular abstract data types.

The computer system 800 is shown in the form of a general-purpose computing device. The components of computer system 800 may include, but are not limited to, one or more processors or processing units 802, a system memory 804, and a bus 818 that couples various system components including system memory 804 to the processor 802. Computer system 800 typically includes a variety of computer system readable media. Such media may be any available media that is accessible by computer system 800, and it includes both, volatile and non-volatile media, removable and non-removable media.

The system memory 804 may include computer system readable media in the form of volatile memory, such as random access memory (RAM) and/or cache memory. Computer system 800 may further include other removable/non-removable, volatile/non-volatile computer system storage media. By way of example only, storage system 812 may be provided for reading from and writing to a non-removable storage chip. Storage media can be connected to bus 806 by one or more data media interfaces. As will be further depicted and described below, memory 804 may include at least one program product having a set (e.g., at least one) of program modules 816 that are configured to carry out the functions of embodiments of the invention.

A program/utility, having a set (at least one) of program modules, may be stored in memory 804 by way of example, and not limitation, as well as an operating system, one or more application programs, other program modules, and program data. Program modules may generally carry out the functions and/or methodologies of embodiments of the invention as described herein.

The computer system 800 may also communicate with one or more external devices such as a keyboard, a pointing device, a display 820, etc.; these devices may be combined in a touch-screen that enable a user to interact with computer system 800; and/or any devices (e.g., network card, modem, etc.) that enable computer system 800 to communicate with one or more other computing devices. Such communication can occur via input/output (I/O) interfaces. Still yet, computer system 800 may communicate with one or more networks such as a local area network (LAN), a general wide area network (WAN), and/or a mobile public network (e.g., the Internet) via network adapter 822. As depicted, network adapter 814 may communicate with the other components of computer system 800 via bus 818. It should be understood that although not shown, other hardware and/or software components could be used in conjunction with computer system 800. Examples, include, but are not limited to: microcode, device drivers, redundant processing units, etc.

Additionally, portions of the system 700 for delaying a transaction to a recipient in a blockchain network may be attached to the bus system 806, in particular the receiving unit 718, confirmation unit 722, denying unit 724 and the generator 726.

The descriptions of the various embodiments of the present invention have been presented for purposes of illustration, but are not intended to be exhaustive or limited to the embodiments disclosed. Many modifications and variations will be apparent to those of ordinary skills in the art without departing from the scope of the described embodiments. The terminology used herein was chosen to best explain the principles of the embodiments, the practical application or technical improvement over technologies found in the marketplace, or to enable others of ordinary skills in the art to understand the embodiments disclosed herein.

The present invention may be embodied as a system, a method, and/or a computer program product. The computer program product may include a computer readable storage medium (or media) having computer readable program instructions thereon for causing a processor to carry out aspects of the present invention.

The medium may be an electronic, magnetic, optical, electromagnetic, infrared or a semi-conductor system for a propagation medium, like e.g., solid state memory, a random access memory (RAM), a read-only memory (ROM).

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device such as an EPROM, or any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to the respective computing devices, e.g., as a smartphone app from a service provider via a mobile network connection.

Computer readable program instructions for carrying out operations of the present invention may be any machine dependent or machine independent instructions, microcode, firmware instructions, state-setting data, or either source code or object code written in any combination of one or more programming languages, including an object-oriented programming language such as C++, Java or the like, and conventional procedural programming languages, such as the "C" programming language or similar programming languages. The computer readable program instructions may execute entirely on the computer device. In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus', and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus', or another device to cause a series of operational steps to be performed on the computer, other programmable apparatus or other device to produce a computer implemented process, such that the instructions which execute on the computer, other programmable apparatus', or another device implement the functions/acts specified in the flowchart and/or block diagram block or blocks.

The flowcharts and/or block diagrams in the figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or act or carry out combinations of special purpose hardware and computer instructions.

The corresponding structures, materials, acts, and equivalents of all means or steps plus function elements in the claims below are intended to include any structure, material, or act for performing the function in combination with other claimed elements, as specifically claimed. The description of the present invention has been presented for purposes of illustration and description, but is not intended to be exhaustive or limited to the invention in the form disclosed. Many modifications and variations will be apparent to those of ordinary skills in the art without departing from the scope of the invention. The embodiments are chosen and described in order to best explain the principles of the invention and the practical application, and to enable others of ordinary skills in the art to understand the invention for various embodiments with various modifications, as are suited to the particular use contemplated.

## Claims

1. A computer-implemented method for delaying a transaction to a recipient in a peer-to-peer blockchain network, wherein the peer-to-peer blockchain network comprises a plurality of nodes for managing a distributed ledger for a crypto-currency, the method comprising
- receiving, by one of the nodes of the peer-to-peer blockchain network, a token and a time period value, the token representing an asset value in the crypto-currency transferable from a sender identifiable by a sender identifier to the recipient identifiable by a recipient identifier,
- confirming, by one of the nodes of the peer-to-peer blockchain network, an asset value transfer, by one of the nodes of the peer-to-peer blockchain network, relating to the token in the blockchain network by appending information about the asset value transfer as transaction information to a block in the blockchain network,
- denying, by one of the nodes of the peer-to-peer blockchain network, the recipient's access to the transferred asset value by the recipient temporarily until the time period expires,
- upon receiving, by one of the nodes of the peer-to-peer blockchain network, a stop message from the sender within the time period defined by the time period value,
denying, by one of the nodes of the peer-to-peer blockchain network, the recipient's access to the transferred asset value permanently, and
granting, by one of the nodes of the peer-to-peer blockchain network, access to the asset value to a third party identifiable by a third party identifier by generating a new transaction which grants access to the asset value to the third party which is neutral to the sender and the recipient.

2. The method according to claim 1, wherein the third party identifier is related to a group of third party identifiers and a respective new transaction is generated to each party of the group, whereby access to a portion of the asset value is granted to each member of the group.

3. The method according to claim 1 or 2, also comprising
- upon determining a cancellation message from the recipient,
granting access to the asset value back to the sender.

4. The method according to any of the preceding claims, also comprising
- extending the time period by setting an increased time period value by the recipient.

5. The method according to any of the preceding claims, also comprising
- upon determining a reset of the time period granting immediate access to the asset value by the recipient.

6. The method according to any of the preceding claims, also comprising
- receiving a service order by the recipient, the service order relating to the token.

7. The method according to any of the preceding claims, wherein the time period value is set by a sender or wherein the time period value is set by the recipient.

8. The method according to any of the preceding claims, also comprising
- transmitting a plurality of potential time period values from the recipient to the sender, and
- selecting one of the plurality of potential time period values by the sender as the time period value.

9. The method according to any of the preceding claims, also comprising
- transmitting a time period range value from the recipient to the sender, and
- selecting a time period value from within the time period range by the sender as the time period value.

10. The method according to any of the preceding claims, wherein an end of the time period is an absolute time value or a relative time value.

11. The method according to claim 10 wherein the relative time values are measured in numbers of blocks of the blockchain network.

12. The method according to any of the preceding claims, wherein one of the members of the group is the sender of the token and/or wherein one of the members of the group is the recipient of the token.

13. The method according to any of the preceding claims, wherein the stop message is also recorded in the blockchain network.

14. A system for delaying a transaction to a recipient in a blockchain network, wherein the blockchain network comprises a peer-to-peer blockchain network, the system comprising:
a third party,
- a plurality of nodes building the blockchain network for managing a distributed ledger for a crypto-currency, each node of the plurality of nodes comprising a central processing unit and a memory coupled to the central processing unit adapted for executing program instructions,
- a receiving unit of one of the nodes of the blockchain network, wherein the receiving unit is adapted for receiving a token and a time period value, the token representing an asset value in the crypto-currency transferable from a sender identifiable by a sender identifier to the recipient identifiable by a recipient identifier,
- a confirmation unit of one of the nodes of the blockchain network, wherein the confirmation unit is adapted for confirming provisionally the asset value transfer relating to the token in the blockchain network by appending information about the asset value transfer as transaction information to a block in the blockchain network,
- a denying unit of one of the nodes of the blockchain network, wherein the denying unit is adapted for denying the recipient's access to the transferred asset value temporarily until the time period expires,
- wherein the denying unit is also adapted for permanently denying the recipient's access to the transferred asset value if a stop message is received from the sender within the time period defined by the time period value, and granting access to the asset value to the third party identifiable by a third party identifier by generating a new transaction which grants access to the asset value to the third party which is neutral to the sender and the recipient.

15. A computer program product for delaying a transaction in a peer-to-peer blockchain network to a recipient, said computer program product comprising a computer readable storage medium having program instructions embodied therewith, said program instructions being executable by one or more computing systems or controllers to cause said one or more computing systems or controllers to
- build a network of a plurality of nodes building the peer-to-peer blockchain network for managing a distributed ledger for a crypto-currency, and further cause to
- receive, by one of the nodes of the peer-to-peer blockchain network, a token and a time period value, the token representing an asset value in the crypto-currency from a sender identifiable by a sender identifier to the recipient identifiable by a recipient identifier,
- confirm, by one of the nodes of the peer-to-peer blockchain network, the asset value transfer provisionally relating to the token in the blockchain network by appending information about the asset value transfer as transaction information to a block in the blockchain network,
- denying, by one of the nodes of the peer-to-peer blockchain network, the recipient's access to the transferred asset value by the recipient temporarily until the time period expires,
- upon a reception of a stop message, by one of the nodes of the peer-to-peer blockchain network, from the sender within the time period defined by the time period value,
deny, by one of the nodes of the peer-to-peer blockchain network, the recipient's access to the transferred asset value permanently, and grant, by one of the nodes of the peer-to-peer blockchain network, access to the asset value to a third party identifiable by a third party identifier by generating a new transaction which grants access to the asset value to the third party which is neutral to the sender and the recipient..

## Patentansprüche

1. Ein computerimplementiertes Verfahren zum Verzögern einer Transaktion an einen Empfänger in einem Peer-to-Peer-Blockchain-Netzwerk, wobei das Peer-to-Peer-Blockchain-Netzwerk eine Vielzahl von Knoten aufweist, die ein verteiltes Hauptbuch für eine Krypto-Währung verwalten, das Verfahren aufweisend
- Empfangen, durch einen der Knoten des Peer-to-Peer-Blockchain-Netzwerks, eines Tokens und eines Zeitraumwerts, wobei das Token einen Vermögenswert in der Krypto-Währung darstellt, der von einem Sender, der durch eine Senderkennung identifizierbar ist, an den Empfänger, der durch eine Empfängerkennung identifizierbar ist, übertragbar ist,
- Bestätigen, durch einen der Knoten des Peer-to-Peer-Blockchain-Netzwerks, einer Vermögenswertübertragung, durch einen der Knoten des Peer-to-Peer-Blockchain-Netzwerks, bezogen auf das Token im Blockchain-Netzwerk, durch Anhängen von Informationen über die Vermögenswertübertragung als Transaktionsinformationen an einen Block im Blockchain-Netzwerk,
- vorübergehendes Verweigern, durch einen der Knoten des Peer-to-Peer-Blockchain-Netzwerks, des Zugriffs des Empfängers auf den übertragenen Vermögenswert durch den Empfänger, bis der Zeitraum abläuft,
- bei Empfang, durch einen der Knoten des Peer-to-Peer-Blockchain-Netzwerks, einer Stoppnachricht vom Sender innerhalb des durch den Zeitraumwert definierten Zeitraumes,
dauerhaftes Verweigern, durch einen der Knoten des Peer-to-Peer-Blockchain-Netzwerks, des Zugriffs des Empfängers auf den übertragenen Vermögenswert,
und
Gewähren, durch einen der Knoten des Peer-to-Peer-Blockchain-Netzwerks, des Zugriffs auf den Vermögenswert an einen Dritten, der durch eine Drittparteikennung identifizierbar ist, durch Erzeugen einer neuen Transaktion, die dem Dritten den Zugriff auf den Vermögenswert gewährt, der gegenüber dem Sender und dem Empfänger neutral ist.

2. Das Verfahren nach Anspruch 1, wobei die Drittparteikennung sich auf eine Gruppe von Drittparteikennungen bezieht und eine jeweilige neue Transaktion für jedes Mitglied der Gruppe erzeugt wird, wodurch jedem Mitglied der Gruppe Zugriff auf einen Teil des Vermögenswerts gewährt wird.

3. Das Verfahren nach Anspruch 1 oder 2, zusätzlich aufweisend
- bei Feststellung einer Stornierungsnachricht vom Empfänger, Zurückgewähren des Zugriffs auf den Vermögenswert an den Sender.

4. Das Verfahren nach einem der vorhergehenden Ansprüche, zusätzlich aufweisend
- Verlängern des Zeitraumes durch Festlegen eines erhöhten Zeitraumwerts durch den Empfänger.

5. Das Verfahren nach einem der vorhergehenden Ansprüche, zusätzlich aufweisend
- bei Feststellung eines Zurücksetzens des Zeitraumes, Gewähren des sofortigen Zugriffs auf den Vermögenswert durch den Empfänger.

6. Das Verfahren nach einem der vorhergehenden Ansprüche, zusätzlich aufweisend
- Empfangen eines Dienstleistungsauftrags durch den Empfänger, wobei der Dienstleistungsauftrag sich auf das Token bezieht.

7. Das Verfahren nach einem der vorhergehenden Ansprüche, wobei der Zeitraumwert durch einen Sender festgelegt wird oder wobei der Zeitraumwert durch den Empfänger festgelegt wird.

8. Das Verfahren nach einem der vorhergehenden Ansprüche, zusätzlich aufweisend
- Übermitteln einer Vielzahl von potenziellen Zeitraumwerten vom Empfänger an den Sender, und
- Auswählen eines der Vielzahl von potenziellen Zeitraumwerten durch den Sender als den Zeitraumwert.

9. Das Verfahren nach einem der vorhergehenden Ansprüche, zusätzlich aufweisend
- Übermitteln eines Zeitraumbereichswerts vom Empfänger an den Sender, und
- Auswählen eines Zeitraumwerts innerhalb des Zeitraumbereichs durch den Sender als den Zeitraumwert.

10. Das Verfahren nach einem der vorhergehenden Ansprüche, wobei das Ende des Zeitraumes ein absoluter Zeitwert oder ein relativer Zeitwert ist.

11. Das Verfahren nach Anspruch 10, wobei die relativen Zeitwerte in Anzahl von Blöcken des Blockchain-Netzwerks gemessen werden.

12. Das Verfahren nach einem der vorhergehenden Ansprüche, wobei eines der Mitglieder der Gruppe der Sender des Tokens ist und/oder wobei eines der Mitglieder der Gruppe der Empfänger des Tokens ist.

13. Das Verfahren nach einem der vorhergehenden Ansprüche, wobei die Stoppnachricht auch im Blockchain-Netzwerk aufgezeichnet wird.

14. Ein System zum Verzögern einer Transaktion an einen Empfänger in einem Blockchain-Netzwerk, wobei das Blockchain-Netzwerk ein Peer-to-Peer-Blockchain-Netzwerk aufweist, das System aufweisend
- einen Dritten,
- eine Vielzahl von Knoten, die das Blockchain-Netzwerk bilden, um ein verteiltes Hauptbuch für eine Krypto-Währung zu verwalten, wobei jeder Knoten der Vielzahl von Knoten eine Zentraleinheit und einen mit der Zentraleinheit gekoppelten Speicher aufweist, der zur Ausführung von Programmanweisungen geeignet ist,
- eine Empfangseinheit eines der Knoten des Blockchain-Netzwerks, wobei die Empfangseinheit dafür angepasst ist, ein Token und einen Zeitraumwert zu empfangen, wobei das Token einen Vermögenswert in der Krypto-Währung darstellt, der von einem Sender, der durch eine Senderkennung identifizierbar ist, an den Empfänger, der durch eine Empfängerkennung identifizierbar ist, übertragbar ist,
- eine Bestätigungseinheit eines der Knoten des Blockchain-Netzwerks, wobei die Bestätigungseinheit dafür angepasst ist, die Vermögenswertübertragung bezogen auf das Token im Blockchain-Netzwerk vorläufig zu bestätigen, indem Informationen über die Vermögenswertübertragung als Transaktionsinformationen an einen Block im Blockchain-Netzwerk angehängt werden,
- eine Verweigereinheit eines der Knoten des Blockchain-Netzwerks, wobei die Verweigereinheit dafür angepasst ist, den Zugriff des Empfängers auf den übertragenen Vermögenswert vorübergehend zu verweigern, bis der Zeitraum abläuft,
- wobei die Verweigereinheit auch dafür angepasst ist,
den Zugriff des Empfängers auf den übertragenen Vermögenswert dauerhaft zu verweigern, wenn eine Stoppnachricht vom Sender innerhalb des durch den Zeitraumwert definierten Zeitraumes empfangen wird, und
Zugriff auf den Vermögenswert an den Dritten zu gewähren, der durch eine Drittparteikennung identifizierbar ist, indem eine neue Transaktion erzeugt wird, die dem Dritten den Zugriff auf den Vermögenswert gewährt, der gegenüber dem Sender und dem Empfänger neutral ist.

15. Ein Computerprogrammprodukt zum Verzögern einer Transaktion in einem Peer-to-Peer-Blockchain-Netzwerk an einen Empfänger, das Computerprogrammprodukt aufweisend ein computerlesbares Speichermedium mit darauf verkörperten Programmanweisungen, wobei die Programmanweisungen von einem oder mehreren Computersystemen oder Steuerungen ausführbar sind, um zu veranlassen, dass das eine oder die mehreren Computersysteme oder Steuerungen
- ein Netzwerk einer Vielzahl von Knoten aufbauen, die das Peer-to-Peer-Blockchain-Netzwerk bilden, um ein verteiltes Hauptbuch für eine Krypto-Währung zu verwalten, und weiter veranlassen zum
- Empfangen, durch einen der Knoten des Peer-to-Peer-Blockchain-Netzwerks, eines Tokens und eines Zeitraumwerts, wobei das Token einen Vermögenswert in der Krypto-Währung vom Sender, der durch eine Senderkennung identifizierbar ist, an den Empfänger, der durch eine Empfängerkennung identifizierbar ist, darstellt,
- vorläufiges Bestätigen, durch einen der Knoten des Peer-to-Peer-Blockchain-Netzwerks, der Vermögenswertübertragung bezogen auf das Token im Blockchain-Netzwerk, indem Informationen über die Vermögenswertübertragung als Transaktionsinformationen an einen Block im Blockchain-Netzwerk angehängt werden,
- vorübergehendes Verweigern, durch einen der Knoten des Peer-to-Peer-Blockchain-Netzwerks, des Zugriffs des Empfängers auf den übertragenen Vermögenswert durch den Empfänger, bis der Zeitraum abläuft,
- bei Empfang einer Stoppnachricht, durch einen der Knoten des Peer-to-Peer-Blockchain-Netzwerks, vom Sender innerhalb des durch den Zeitraumwert definierten Zeitraumes,
dauerhaftes Verweigern, durch einen der Knoten des Peer-to-Peer-Blockchain-Netzwerks, des Zugriffs des Empfängers auf den übertragenen Vermögenswert, und
Gewähren, durch einen der Knoten des Peer-to-Peer-Blockchain-Netzwerks, des Zugriffs auf den Vermögenswert an einen Dritten, der durch eine Drittparteikennung identifizierbar ist, indem eine neue Transaktion erzeugt wird, die dem Dritten den Zugriff auf den Vermögenswert gewährt, der gegenüber dem Sender und dem Empfänger neutral ist.

## Revendications

1. Procédé mis en oeuvre par ordinateur pour retarder une transaction à un destinataire dans un réseau blockchain pair-à-pair, le réseau blockchain pair-à-pair comprenant une pluralité de noeuds pour gérer un registre distribué pour une crypto-monnaie, le procédé comprenant
- la réception, par l'un des noeuds du réseau blockchain pair-à-pair, d'un jeton et d'une valeur de période temporelle, le jeton représentant une valeur d'actif dans la crypto-monnaie transférable d'un expéditeur identifiable par un identifiant d'expéditeur au destinataire identifiable par un identifiant de destinataire,
- la confirmation, par l'un des noeuds du réseau blockchain pair-à-pair, d'un transfert de valeur d'actif, par l'un des noeuds du réseau blockchain pair-à-pair, concernant le jeton dans le réseau blockchain par l'ajout d'informations sur le transfert de valeur d'actif comme informations de transaction à un bloc dans le réseau blockchain,
- le refus, par l'un des noeuds du réseau blockchain pair-à-pair, de l'accès du destinataire à la valeur d'actif transférée par le destinataire temporairement jusqu'à l'expiration de la période temporelle,
- à la réception, par l'un des noeuds du réseau blockchain pair-à-pair, d'un message d'arrêt de l'expéditeur dans la période définie par la valeur de période temporelle,
le refus, par l'un des noeuds du réseau blockchain pair-à-pair, de l'accès du destinataire à la valeur d'actif transférée de manière permanente, et
l'octroi, par l'un des noeuds du réseau blockchain pair-à-pair, de l'accès à la valeur d'actif à un tiers identifiable par un identifiant de tiers en générant une nouvelle transaction qui octroie l'accès à la valeur d'actif au tiers qui est neutre à l'expéditeur et au destinataire.

2. Le procédé selon la revendication 1, dans lequel l'identifiant de tiers est lié à un groupe d'identifiants de tiers et une nouvelle transaction respective est générée pour chaque partie du groupe, l'accès à une portion de la valeur d'actif étant octroyé à chaque membre du groupe.

3. Le procédé selon la revendication 1 ou 2, comprenant également
- à la détermination d'un message d'annulation du destinataire, l'octroi de l'accès à la valeur d'actif de retour à l'expéditeur.

4. Le procédé selon l'une quelconque des revendications précédentes, comprenant également
- l'extension de la période temporelle en définissant une valeur de période temporelle augmentée par le destinataire.

5. Le procédé selon l'une quelconque des revendications précédentes, comprenant également
- à la détermination d'une réinitialisation de la période temporelle, l'octroi immédiat de l'accès à la valeur d'actif par le destinataire.

6. Le procédé selon l'une quelconque des revendications précédentes, comprenant également
- la réception d'un ordre de service par le destinataire, l'ordre de service se rapportant au jeton.

7. Le procédé selon l'une quelconque des revendications précédentes, dans lequel la valeur de période temporelle est définie par un expéditeur ou dans lequel la valeur de période temporelle est définie par le destinataire.

8. Le procédé selon l'une quelconque des revendications précédentes, comprenant également
- la transmission d'une pluralité de valeurs de période temporelle potentielles du destinataire à l'expéditeur, et
- la sélection de l'une des pluralités de valeurs de période temporelle potentielles par l'expéditeur comme la valeur de période temporelle.

9. Le procédé selon l'une quelconque des revendications précédentes, comprenant également
- la transmission d'une valeur de gamme de période temporelle du destinataire à l'expéditeur, et
- la sélection d'une valeur de période temporelle à l'intérieur de la gamme de période temporelle par l'expéditeur comme la valeur de période temporelle.

10. Le procédé selon l'une quelconque des revendications précédentes, dans lequel la fin de la période temporelle est une valeur temporelle absolue ou une valeur temporelle relative.

11. Le procédé selon la revendication 10, dans lequel les valeurs temporelles relatives sont mesurées en nombres de blocs du réseau blockchain.

12. Le procédé selon l'une quelconque des revendications précédentes, dans lequel l'un des membres du groupe est l'expéditeur du jeton et/ou dans lequel l'un des membres du groupe est le destinataire du jeton.

13. Le procédé selon l'une quelconque des revendications précédentes, dans lequel le message d'arrêt est également enregistré dans le réseau blockchain.

14. Système pour retarder une transaction à un destinataire dans un réseau blockchain, le réseau blockchain comprenant un réseau blockchain pair-à-pair, le système comprenant
un tiers,
- une pluralité de noeuds constituant le réseau blockchain pour gérer un registre distribué pour une crypto-monnaie, chaque noeud de la pluralité de noeuds comprenant une unité de traitement centrale et une mémoire couplée à l'unité de traitement centrale adaptée pour exécuter des instructions de programme,
- une unité de réception de l'un des noeuds du réseau blockchain, l'unité de réception étant adaptée pour recevoir un jeton et une valeur de période temporelle, le jeton représentant une valeur d'actif dans la crypto-monnaie transférable d'un expéditeur identifiable par un identifiant d'expéditeur au destinataire identifiable par un identifiant de destinataire,
- une unité de confirmation de l'un des noeuds du réseau blockchain, l'unité de confirmation étant adaptée pour confirmer provisoirement le transfert de valeur d'actif concernant le jeton dans le réseau blockchain en ajoutant des informations sur le transfert de valeur d'actif comme informations de transaction à un bloc dans le réseau blockchain,
- une unité de refus de l'un des noeuds du réseau blockchain, l'unité de refus étant adaptée pour refuser l'accès du destinataire à la valeur d'actif transférée temporairement jusqu'à l'expiration de la période temporelle,
- l'unité de refus étant également adaptée
pour refuser de manière permanente l'accès du destinataire à la valeur d'actif transférée si un message d'arrêt est reçu de l'expéditeur dans la période définie par la valeur de période temporelle, et
octroyer l'accès à la valeur d'actif au tiers identifiable par un identifiant de tiers en générant une nouvelle transaction qui octroie l'accès à la valeur d'actif au tiers qui est neutre à l'expéditeur et au destinataire.

15. Produit programme informatique pour retarder une transaction dans un réseau blockchain pair-à-pair à un destinataire, ledit produit programme informatique comprenant un support de stockage lisible par ordinateur ayant des instructions de programme incorporées avec celui-ci, lesdites instructions de programme étant exécutables par un ou plusieurs systèmes informatiques ou contrôleurs pour amener ledit un ou plusieurs systèmes informatiques ou contrôleurs à
- construire un réseau d'une pluralité de noeuds constituant le réseau blockchain pair-à-pair pour gérer un registre distribué pour une crypto-monnaie, et en outre amener à
- recevoir, par l'un des noeuds du réseau blockchain pair-à-pair, un jeton et une valeur de période temporelle, le jeton représentant une valeur d'actif dans la crypto-monnaie d'un expéditeur identifiable par un identifiant d'expéditeur au destinataire identifiable par un identifiant de destinataire,
- confirmer, par l'un des noeuds du réseau blockchain pair-à-pair, le transfert de valeur d'actif provisoirement concernant le jeton dans le réseau blockchain en ajoutant des informations sur le transfert de valeur d'actif comme informations de transaction à un bloc dans le réseau blockchain,
- refuser, par l'un des noeuds du réseau blockchain pair-à-pair, l'accès du destinataire à la valeur d'actif transférée par le destinataire temporairement jusqu'à l'expiration de la période temporelle,
- à la réception d'un message d'arrêt, par l'un des noeuds du réseau blockchain pair-à-pair, de l'expéditeur dans la période définie par la valeur de période temporelle,
refuser, par l'un des noeuds du réseau blockchain pair-à-pair, l'accès du destinataire à la valeur d'actif transférée de manière permanente, et
octroyer, par l'un des noeuds du réseau blockchain pair-à-pair, l'accès à la valeur d'actif à un tiers identifiable par un identifiant de tiers en générant une nouvelle transaction qui octroie l'accès à la valeur d'actif au tiers qui est neutre à l'expéditeur et au destinataire.
